# EUROPÄISCHE PATENTSCHRIFT

(11) **EP 0 617 238 B1**
(45) Veröffentlichungstag und Bekanntmachung des Hinweises auf die Patenterteilung: **15.05.1996**
(21) Anmeldenummer: 94104515.5
(22) Anmeldetag: 22.03.1994
(51) Int. Cl.: F24D 13/04, F24H 3/00, G05D 23/20

(54) **Steuervorrichtung für eine Heizeinrichtung bzw. Heizeinrichtung**
Heating device and its control
Dispositif de chauffage et son contrôle

(30) Priorität: 22.03.1993 DE 4309180
(43) Veröffentlichungstag der Anmeldung: 28.09.1994
(73) Patentinhaber: KERMI GmbH, D-94447 Plattling (DE)
(72) Erfinder: Feldmeier, Dieter, Dipl.-Ing., D-94469 Deggendorf (DE)
(74) Vertreter: Schwabe - Sandmair - Marx

(56) Entgegenhaltungen:
- EP-A- 0 080 428
- WO-A-84/02765
- DE-C- 4 022 935
- FR-A- 2 351 361

## Beschreibung

Die Erfindung betrifft eine Steuervorrichtung für einen Heizkörper, vorzugsweise für einen Badheizkörper, gemäß dem Oberbegriff des Patentanspruchs 1 bzw. einen Heizkörper gemäß dem Oberbegriff des Patentanspruchs 7, wie er aus der EP-A-0 080 428 hervorgeht.

Bekannte Badheizkörper weisen eine elektrische oder elektronische Schaltung mit einer Vergleichs- und in der Regel mit einer Speichereinrichtung auf. Mindestens eine Temperaturmeßeinrichtung zum Messen der Temperatur eines Heizmediums, das in der Heizeinrichtung enthalten ist, bzw. durch diese zirkuliert, ist ebenfalls angeordnet. Bekannte Steuervorrichtungen weisen ebenfalls eine Regeleinrichtung zur Steuerung eines in Heizleistung umwandelbaren Energieflusses, in der Regel elektrischen Stromes, auf. Eine Zeitgebereinrichtung ist häufig ebenfalls vorhanden, um zu vorgegebenen Zeiten bzw. über vorgegebene Zeitintervalle die Steuervorrichtung zu aktivieren und damit die Heizeinrichtung anzuwärmen, um einen Raum, z.B ein Badezimmer, auf eine Temperatur zu temperieren, die als angenehm empfunden wird. In der Heizeinrichtung ist ein Heizgerät, vorzugsweise ein Heizstab, der als Widerstandsheizung ausgebildet werden kann, angeordnet.

Bekannt sind dabei Badezimmer-Radiatoren bzw. -Konvektoren, die an den Wasser-Kreislauf einer Zentralheizungsanlage angeschlossen sind. Üblicherweise sind derartige Badradiatoren bzw. -konvektoren mit Thermostatventilen ausgerüstet, die eigenständig schalten, d.h. in Abhängigkeit von der Einstellung des Thermostaten ein Dosierventil öffnen, drosseln oder verschließen.

Nachteilig ist bei derartigen Badradiatoren, daß diese, wenn in der Übergangsperiode, beispielsweise im Frühjahr oder im Herbst, oder an kühlen Sommertagen, die Zentralheizung nicht läuft, das jeweilige Zimmer, insbesondere Badezimmer, von Benutzern als zu kühl empfunden wird.

Abhilfe schafften Badradiatoren, die zwar an eine Zentralheizung angeschlossen waren, jedoch zusätzlich mit einer Elektro-Heizpatrone ausgerüstet wurden. Die Elektro-Heizpatrone wird mit elektrischem Strom beheizt. Dabei wird die Stromzufuhr häufig mittels Geräten geregelt bzw. gesteuert, die einerseits mit einer digitalen Zeitschaltuhr die Einschaltzeiten dieser elektrischen Zusatzheizung vorgeben können und andererseits über einen Temperaturfühler die Raumtemperatur erfassen, und die Heizleistung der Heizpatrone bzw. des Widerstandsheizstabes über die Raumtemperatur regeln.

Zudem war es bekannt, die Thermostatventile von Badheizkörpern und anderen Zentralheizungskörpern einzeln mittels einer Raumtemperatur-Regeleinrichtung zu regeln, beispielsweise durch einen motorischen Stellantrieb oder durch ein von einer Regelung gesteuertes, elektrisch beheiztes Flüssigkeitsgefäß, welches auf den Stellstift bzw. die Regeleinheit des Thermostatventils einwirkt.

Ferner ist ein thermostatventilgesteuerter Badheizkörper mit einer zusätzlichen Elektro-Heizpatrone bekannt, der zeitgesteuert und raumtemperaturgeregelt betrieben werden kann.

Nachteilig ist bei den bekannten Steuermethoden bzw. Steuervorrichtungen, daß gesonderte Temperatursteuer-bzw. -regeleinrichtungen und gegebenenfalls Zeitsteuereinrichtungen jeweils für den Zentralheizungsbetrieb und den Elektroheizbetrieb vorgesehen sind. Dies führt zu einem erhöhten technischen Aufwand. Außerdem kann dadurch ein gleichzeitiger Zentralheizungs- und Elektroheizungsbetrieb nicht optimiert werden. Ferner kann nicht vermieden werden, daß im reinen Elektroheizbetrieb das durch den Heizstab bzw. die Heizpatrone aufgeheizte Wasser im gesamten Zentralheizungskreislauf zirkuliert und damit unnötig viel Wärme aus der zu heizenden Heizeinrichtung, insbesondere Badheizung, in andere Räume transportiert wird, wo keine Heizleistung erforderlich oder gewünscht ist. Hierdurch wird nicht nur Energie verschwendet, sondern es ist auch möglich, daß angrenzende Räume, z.B. Schalfräume, auf unangenehme Temperatur aufgeheizt werden, die als störend empfunden werden.

Aus der EP-A-0 080 428 ist eine gattungsgemäße Steuervorrichtung bzw. ist ein gattungsgemäßer Heizkörper gemäß der vorliegenden Erfindung bekannt. Dabei ist ein Heizkörper über eine Vorlauf- und eine Rücklaufleitung an ein Zentralheizungssystem angeschlossen, wobei sowohl der Vorlauf als auch der Rücklauf über jeweilige Ventile abschließbar ist, so daß der betreffende Heizkörper von dem Zentralheizungssystem abgekoppelt werden kann. Die Heizeinrichtung weist eine Heizpatrone mit einer Thermostatregelung auf. Da sich das Heizmedium (beispielsweise Wasser) in dem betreffenden Heizkörper ausdehnt, und die Sperrventile aus dem Heizkörper im Prinzip einen Druckbehälter machen, enthält der bekannte Heizkörper einen Druckausgleichsbehälter. Der bekannte Heizkörper hat den Nachteil, daß die Thermostatregelung der Heizpatrone aktiviert werden muß, um die Ventile am Vor-bzw. Rücklauf in Betrieb zu nehmen. Darüber hinaus handelt es sich bei dem bekannten Heizkörper um ein Druckgefäß, das in verschiedenen Ländern bestimmten gesetzlichen Regelungen unterliegt und bestimmte, für übliche Heizkörper nicht erforderliche Überdimensionierungen erfordert.

Aus dem FR-A-2 351 361 ist ebenfalls ein gattungsgemäßer Heizkörper bzw. eine gattungsgemäße Steuervorrichtung für einen Heizkörper bekannt. Der betreffende Heizkörper weist eine Regeleinrichtung für eine Heizpatrone bzw. einen elektrischen Widerstandsheizstab auf und weist keine Ventile auf, die den betreffenden ansonsten an eine Zentralheizungsanlage angeschlossenen Heizkörper gegenüber der Zentralheizungsanlage abtrennen könnten. Ein Druckausgleich kann hier über einen Druckausgleichsbehälter der gesamten, mehrere Heizkörper aufweisende Zentralheizungsanlage erfolgen. Auch ein Fall wird hier angesprochen, bei dem nur über Widerstandsheizungen geheizte Heizkörper miteinander verbunden und über einen separaten Druckausgleichsbehälter für sämtliche Heizkörper einen Druckausgleich finden können.

Aus der WO 84/02765 ist ein Steuerungssystem für eine vollständige Zentralheizungsanlage bekannt. Bei dieser Heizungsanlage ist ein zentraler Kessel vorgesehen, der über übliche Leitungen an verschiedene Heizkörper angeschlossen ist. Jeder Heizkörper weist zusätzlich eine elektrische Heizpatrone auf. Der Heizbrenner der Heizungsanlage ist mit einem Außentemperaturfühler verbunden, der in Abhängigkeit von der Programmierung einer Steuerung entweder den Zentralheizungsbrenner einschaltet oder aber über ferngesteuerte Ventile die Heizkörper von dem Zentralheizungssystem abkoppelt und eine elektrische Widerstandsheizung eines jeweiligen der vorhandenen Heizkörper in Betrieb setzt. Jeder der Heizkörper in einem der jeweiligen Räume weist einen Temperaturfühler oder Thermostaten auf, der die jeweiligen elektrischen Widerstandsheizstäbe aktiviert. Derlei Systeme sind insofern sehr nachteilig, als sämtliche bekannten Steuerungen nach dem Prinzip arbeiten, daß jeweiligen Tagen zugeordnete einzelne Meßpunkte von einem Außentemperaturfühler genommen werden. Durch diese Meßpunkte wird eine Kurve gelegt, wobei die sich ergebende Kurve dann die Reaktion der Steuerung beeinflußt. Üblicherweise werden drei Meßpunkte genommen, so daß ganz erhebliche Verzögerungen zwischen einem auftretenden Temperaturwechsel und der Reaktion der Steuerung auftreten müssen. Da gerade in der Übergangszeit zwischen der Heizperiode und den im wesentlichen keine Heizung erfordernden Perioden erhebliche Schwankungen auftreten, ist eine derartige Kombinationsheizung, wie sie aus dieser Druckschrift bekannt ist, in der Praxis nicht dazu in der Lage, auf die Bedürfnisse der Bewohner für unterschiedliche Räume zu reagieren, da einerseits die Reaktionszeit viel zu lang ist und andererseits eine auf einen bestimmten Raum gerichteten Reaktion, etwa in einem Badezimmer, wo ein erhöhter Wärmebedarf vorhanden ist, nicht möglich ist.

Aus der DE-C-40 22 935 ist ein Verfahren zur geregelten Beheizung eines einzelnen Raumes bekannt, bei dem eine Regelung anhand der Temperatur des Heizmediums am Rücklauf eines oder mehrerer Heizkörper eines Raumes vorgenommen wird. Anhand der Reaktion des Heizmediums auf die Umgebung wird eine Regelung dann vorgenommen, wenn das ablaufende Heizmedium beispielsweise zu kühl ist. In diesem Falle wird das Ventil weiter geöffnet, um mehr Heizmedium durchlaufen zu lassen. Ist das durch den Rücklauf fließende Heizmedium zu heiß, wird der Durchlauf des Heizmediums gedrosselt, so daß das Heizmedium eine bestimmte gewünschte Temperatur aufweist. Dieses Verfahren bzw. die zugehörige Vorrichtung sind insofern höchst nachteilig, als die Reaktion des Heizmediums auf die Raumtemperatur äußerst träge ist, so daß die Schwankungen der Temperatur in dem zu heizenden Raum sehr unangenehm sind. Eine lokale elektrische Heizung ist hier nicht vorgesehen.

Es ist die Aufgabe der Erfindung, den Nachteilen des Standes der Technik abzuhelfen und insbesondere eine verbesserte Steuervorrichtung für einen Heizkörper gemäß dem Oberbegriff des Patentanspruchs 1, bzw. einen verbesserten Heizkörper gemäß dem Oberbegriff des Patentanspruchs 7 zu schaffen, die eine optimierte Kombination aus Zentralheiz- und Elektroheizbetrieb ermöglichen.

Diese Aufgabe wird durch Vorrichtungen gemäß den Ansprüchen 1 und 7 gelöst.

Zweckmäßige Ausgestaltungen der erfindungsgemäßen Steuervorrichtung ergeben sich aus den Unteransprüchen.

Dadurch, daß erfindungsgemäß in der Steuervorrichtung eine Drosseleinrichtung zum Reduzieren oder Unterbinden des Stromes des Heizmediums vorgesehen ist, welche durch die Schaltung geöffnet, gedrosselt oder vollkommen geschlossen werden kann, um den Zulauf und/oder Ablauf des Heizmediums von bzw. zu einem Zentralheizungssystem mittels der Drosseleinrichtung in Abhängigkeit zu einer voreingestellten Zieltemperatur für die Heizeinrichtung und in Abhängigkeit zu der Temperatur des Heizmediums, die am Zulauf des Heizkörpers gefühlt wird, zu steuern, und die Schaltung mittels der Drosseleinrichtung den Zulauf und/ oder den Ablauf des Heizmediums zu bzw. von dem Zentralheizungssystem unterbinden kann, wenn die Zulauftemperatur eine vorgegebene Temperatur unterschreitet, ist es möglich, insbesondere auch in Übergangszeiten einen gemischten Zentralheizungs- und Heizpatronenbetrieb vorzunehmen.

Dieses hat auch den Vorteil, daß die Heizeinrichtung, die temperiert werden soll, teilweise oder vollständig von dem Zentralheizungssystem abgeriegelt werden kann, und allein durch die in der Heizeinrichtung befindliche Heizpatrone geheizt werden kann, ohne daß die Gefahr besteht, daß benachbarte Räume mit aufgeheizt werden, wodurch die Temperierung des Raumes, der aufgeheizt werden soll, verzögert wird und benachbarte Räume unerwünschterweise aufgewärmt werden.

Außerdem kann vermieden werden, daß unnötige Energieverluste auftreten. Zudem wird gewährleistet, daß unabhängig von dem korrekten Verhalten einer Bedienungsperson die richtige Betriebsart gewählt wird, wodurch zusätzliche Sicherheit zur Verfügung gestellt wird und der gerätetechnische Aufwand trotz der vorteilhaften zusätzlichen Steuerungsmöglichkeiten insgesamt reduziert wird.

Erfindungsgemäß ist eine Raumtemperatur-Fühleinrichtung angeordnet, um die erfindungsgemäße Steuereinrichtung mit Informationen über die gegenwärtige Raumtemperatur zu versorgen, damit die Steuereinrichtung in Abhängigkeit von der gemessenen Raumtemperatur die Heizleistung der Heizeinrichtung, die nachfolgend als Badheizkörper bezeichnet wird, zu steuern.

Da die Heizleistungen in Abhängigkeit von persönlichen Wünschen der Gebäudebewohner zu steuern sind, kann vorteilhafterweise eine Eingabeeinrichtung angeordnet sein, um einige oder sämtliche Steuerparameter, Grenzwerte oder dergleichen, insbesondere die Zieltemperatur des Raumes, einzugeben.

Vorteilhafterweise ist die Steuervorrichtung in einem gesondert dafür vorgesehenen Abschnitt an dem Heizkörper integriert, so daß eine separate Montage in einer Steckdose, in einer Wanddose oder dergleichen erübrigt werden kann. Dieses führt zu einem verbesserten ästhetischen Eindruck und erhöht gleichzeitig die Sicherheit der Konstruktion.

Durch die Anordnung einer Zeitgebereinrichtung ist es möglich, Heizperioden, Zeitpunkte für den Beginn bzw. das Ende einer Heizperiode, Rampen und dergleichen mehr vorzuprogrammieren, wobei die Steuervorrichtung gemäß der Erfindung zu diesen Zeiten ihre Tätigkeit aufnimmt.

Die Steuervorrichtung kann mit einer Batterie und/oder mit einem Stromnetzanschluß versehen sein. Durch die Anordnung an der Batterie ist es möglich, auf einen unmittelbaren Stromanschluß für die erfindungsgemäße Steuervorrichtung zu verzichten, wodurch ästhetisch wenig vorteilhafte Kabel wegfallen können.

Durch die Anordnung einer Überwachungsschaltung ist es möglich, eine Anzeige z.B. in Form einer LED-Warnleuchte vorzusehen, die anzeigt, wenn die Batterie auf einen vorgegebenen Wert geleert bzw. entladen worden ist. Gegebenenfalls kann in einem derartigen Fall auf das Stromnetz umgeschaltet werden, falls die Steuervorrichtung zusätzlich an das öffentliche Stromnetz bzw. das Hausstromnetz angeschlossen ist. Dabei kann die Batterie wieder aufgeladen werden und die Steuervorrichtung ferner betriebsbereit gehalten werden.

Um zu vermeiden, daß unästhetische Kabel zwischen der Steuervorrichtung und den Wandstromzuleitungen in sichtbarer Weise gespannt werden müssen, können Profilleisten oder dergleichen vorgesehen sein, durch die die von der Wand bzw. der Steuervorrichtung zu den verschiedenen Komponenten der Steuervorrichtung gezogenen Kabel von außen den Blicken des Betrachters verwehrt wird. Hierdurch ist neben einer günstigeren ästhetischen Ausgestaltung zusätzlich dafür gesorgt, daß die Kabelzuführungen geschützt sind und keinen mechanischen oder sonstigen Belastungen ausgesetzt werden können, was die Sicherheit eines in einem Naßbereich aufgestellten Badheizkörpers verbessern helfen kann.

Vorteilhafterweise vermag die Steuervorrichtung bzw. die elektrische bzw. elektronische Schaltung der Steuervorrichtung die aktuellen Steuersignale nach Ablauf vorgebbarer Zeitintervalle zu wiederholen, um sicherzustellen, daß die korrekten Steuersignale an den jeweiligen Teilen bzw. Einheiten der Steuervorrichtung anliegen. Hierdurch kann die Sicherheit der erfindungsgemäßen Steuervorrichtung erhöht werden, da Störungen, die beispielsweise durch Netzrauschen oder dergleichen auftreten könnten, in Zeitintervallen automatisch behoben werden.

Vorteilhafterweise kann das Heizgerät bzw. der Heizstab oder die Heizpatrone in seiner Längsrichtung mit Zonen unterschiedlicher Heizleistung versehen werden. Ganz besonders vorteilhaft dürfte es sein, wenn die Heizleistung in einer Richtung des Heizstabes bzw. der Heizpatrone zunimmt. Hierdurch werden in einer Richtung Zonen unterschiedlicher Wärme erzeugt, wodurch die Konvektion des Heizmediums in dem Badheizkörper angeregt werden kann.

Für die Heizeinrichtung bzw. den Badheizkörper, der in Form einer Radiator- und/oder einer Konvektionsheizung ausgestaltet sein kann, sollte die Möglichkeit eines Druckausgleichs in jedem Falle vorgesehen sein. Dieses kann in Form eines Überdruckventils, beispielsweise auf der Rücklaufseite zu der Zentralheizung durchgeführt werden, bzw. der Zu- bzw. der Ablauf werden nur so geschlossen, daß immer noch ein geringer Durchgang bleibt, um einen Druckausgleich zu ermöglichen. Eine derartige Öffnung kann nur durch einen zusätzlichen Druckausgleichsbehälter erübrigt werden, der dann in dem Badheizkörper selbst vorgesehen sein muß.

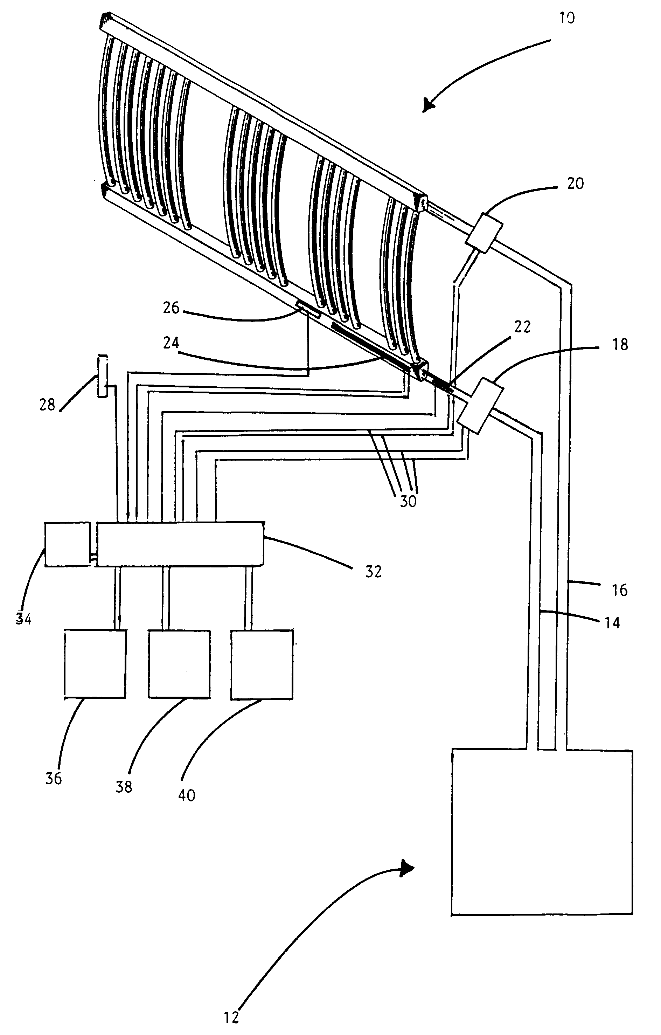

Nachfolgend wird die erfindungsgemäße Steuervorrichtung bzw. die erfindungsgemäße Heizeinrichtung unter Bezugnahme auf die einzige Figur näher erläutert, wobei diese Figur ein bevorzugtes Ausführungsbeispiel darstellt. Dabei werden weitere Vorteile und Merkmale gemäß der vorliegenden Erfindung offenbart.

Die einzige Figur zeigt einen Badheizkörper mit daran anschließender Steuervorrichtung, die die Merkmale gemäß der vorliegenden Erfindung neben anderen Merkmalen aufweist.

Ein Badheizkörper 10 ist über eine Zuleitung 14 und einen Ablauf 16 an ein Zentralheizungssystem 12, das lediglich schematisch dargestellt ist, angeschlossen. Im Zulauf zu dem Badheizkörper 10 ist ein Ventil 18, vorzugsweise ein Dosierventil 18, vorgesehen, über welches der Strom des flüssigen Heizmediums von dem Zentralheizungssystem 12 gedrosselt oder gegebenenfalls unterbunden werden kann. Auch im Ablauf bzw. Rücklauf 16 des Badheizkörpers 10 kann ein Ventil angeordnet sein, welches lediglich als Sperrventil, jedoch auch als Dosierventil ausgebildet sein kann. Es sollte lediglich gewährleistet sein, daß entweder eines der Ventile einen Druckausgleich zuläßt, um zu verhindern, daß, wenn der Badheizkörper 10, separat durch eine Heizpatrone bzw. einen Heizstab 24 geheizt wird, dieser durch das expandierende Heizmedium platzt. Es kann aber auch ein Ausgleichsbehälter untergebracht werden, der im Bedarfsfalle überschüssige Flüssigkeit aufnimmt.

In dem Badheizkörper 10 ist die Widerstandsheizung bzw. die Heizpatrone 24 untergebracht, wobei dieser ein Sicherheits-Thermoschalter 26 zugeordnet sein kann, der unmittelbar auf die Stromzufuhr des Heizstabes 24 einwirkt, oder über eine Steuerelektrik bzw. Steuerelektronik 32 die Funktion des Heizstabes bzw. der Heizpatrone 24 beeinflußt. Ein zusätzlicher Meßfühler 22 in der Zulaufleitung 14 leitet Informationen über die Vorlauftemperatur des Heizmediums an die Elektronik bzw. Elektrik 32 weiter, um einen Wert bzw. Werte zu liefern, anhand derer entschieden werden kann, ob der Zulauf 14 und/oder der Rücklauf 16 über das Dosierventil 18 und/oder das Ventil bzw. Dosierventil 20 geöffnet, gedrosselt oder verschlossen werden sollen, wobei wiederum vorzugsweise zumindest eine minimale Druckausgleichsöffnung verbleiben sollte, um eine Beschädigung des Heizkörpers zu vermeiden, wenn dieser separat durch die Heizpatrone 24 aufgeheizt wird.

Ein Raumtemperaturfühler 28 gibt Meßwerte über die Raumtemperatur an die Steuerelektrik bzw. Steuerelektronik 32 weiter. Sämtliche elektrischen bzw. elektronischen Komponenten sind über Steuer- bzw. Versorgungsleitungen 30 miteinander verbunden, die nur beispielhaft in der einzigen Figur ausgewiesen sind.

An die Steuerelektronik bzw. -elektrik 32 kann eine Zeitgebereinrichtung, z.B. eine programmierbare Zeituhr 34, angeschlossen sein, die auf die Wünsche des Benutzers abgestimmte zeitbezogene Steuerbefehle an die Steuerelektrik bzw. -elektronik 32 weitergibt, um zu veranlassen, daß die erfindungsgemäße Steuervorrichtung bzw. Steueranordnung ihren Betrieb aufnimmt.

Zusätzlich können eine Eingabeeinrichtung 36, eine Vergleichseinrichtung 38 und eine Speichereinrichtung 40 vorgesehen sein. Die Eingabeeinrichtung ermöglicht es dem Benutzer, beispielsweise über Funktions- oder Eingabetasten Steuerbefehle an die Elektronik bzw. Elektrik 32 oder auch gleichzeitig an die Zeitgebereinrichtung 34 einzugeben. Mittels der Vergleichseinrichtung 38 können die Solltemperaturen mit den gegenwärtigen Temperaturen verglichen werden, um anhand der Differenz gegebenenfalls den Durchfluß des Heizmediums zu drosseln oder zu erhöhen oder gegebenenfalls die Stromzufuhr zu der Heizpatrone bzw. dem Heizstab 24 einzuschränken oder zu erhöhen.

Die Speichereinrichtung 40 kann die eingegebenen Informationen speichern, um sie im Bedarfsfalle der Steuerelektronik zur Verfügung zu stellen.

## Patentansprüche

1. Steuervorrichtung für einen Heizkörper, vorzugsweise einen Badheizkörper (10),
- mit einer elektrischen oder elektronischen Schaltung (32),
- mit mindestens einer Temperaturmeßeinrichtung (28) für die Raumtemperatur,
- mit einer Regeleinrichtung zur Steuerung eines in Heizleistung umwandelbaren Energieflusses, insbesondere elektrischen Stroms, mit einem elektrischen Heizgerät, vorzugsweise einem Elektro-Heizstab oder einer Elektro-Heizpatrone (24),
- mit mindestens einer Drosseleinrichtung zum Öffnen oder Unterbrechen des Stromes des Heizmediums, zur Anordnung in dem Zu- und/oder Rücklauf (14, 16) des Heizkörpers (10);
- die Schaltung (32) veranlaßt die Öffnung oder Unterbrechung des Zulaufs und/oder Rücklaufs des Heizmediums von bzw. zu einem Zentralheizungssystem mittels der Drosseleinrichtung (18),
**gekennzeichnet** durch die folgenden Merkmale:
a) die Schaltung (32) kann auch eine Drosselung des Zulaufs und/oder Rücklaufs des Heizmediums von bzw. zu dem Zentralheizsystems mittels der Drosseleinrichtung veranlassen, wobei die Öffnung, Unterbrechung oder Drosselung in Abhängigkeit von einer voreingestellten Soll- bzw. Ziel-Raumtemperatur für den Heizkörper (10) und in Abhängigkeit von der Temperatur des Heizmediums am Zulauf des Heizkörpers (10) über eine weitere dort anzuordnende Temperaturmeßeinrichtung (22) erfolgt;
b) die Schaltung (32) steuert den Zulauf und/oder den Rücklauf des Heizmediums mittels der Drosseleinrichtung (18, 20) zu bzw. von dem Zentralheizungssystem (12), wenn die Zulauftemperatur einen vorgegebenen Temperaturwert unterschreitet.

2. Steuervorrichtung nach Anspruch 1, dadurch **gekennzeichnet,** daß eine Eingabeeinrichtung (36) angeordnet ist, um Steuerparameter, insbesondere die Ziel-bzw. Soll-Raumtemperatur einzugeben.

3. Steuervorrichtung nach einem der Ansprüche 1 oder 2, dadurch **gekennzeichnet,** daß die Steuervorrichtung an eine Batterie und/oder an das Stromnetz anschließbar ist und vorzugsweise eine Überwachungsschaltung angeordnet ist, die anzeigt, wenn die Batterie auf einen vorgegebenen Wert geleert ist, und gegebenenfalls auf das Stromnetz umschaltet, um die Batterie aufzuladen und vorzugsweise die Steuereinrichtung betriebsbereit hält.

4. Steuervorrichtung nach einem der Ansprüche 1 bis 3, dadurch **gekennzeichnet,** daß die aktuellen Steuersignale durch die Steuereinrichtung nach Ablauf vorgebbarer Zeitintervalle wiederholbar sind, um Störungen zu minimieren.

5. Steuervorrichtung nach einem der Ansprüche 1 bis 4, dadurch **gekennzeichnet,** daß das Heizgerät bzw. der Heizstab in seiner Längsrichtung mit Zonen unterschiedlicher Heizleistung bzw. unterschiedlichen Widerstandes versehen ist, wobei die Heizleistung bzw. der Widerstand vorzugsweise in einer Richtung zunimmt.

6. Steuervorrichtung nach einem der vorstehenden Ansprüche, dadurch **gekennzeichnet,** daß ein Druckausgleichsbehälter an den Heizkörper (10) angeschlossen ist.

7. Heizkörper (10), vorzugsweise Badheizkörper, mit einer Steuervorrichtung, mit folgenden Merkmalen:
- einer elektrischen oder elektronischen Schaltung (32),
- mindestens einer Temperaturmeßeinrichtung (28),
- einer Regeleinrichtung zur Steuerung eines in Heizleistung umwandelbaren Energieflusses, insbesondere elektrischen Stroms, mit einem elektrischen Heizgerät, vorzugsweise einem Elektro-Heizstab oder einer Elektro-Heizpatrone (24),
- einer Drosseleinrichtung zum Öffnen oder Unterbrechen des Stromes des Heizmediums, die in dem Zu- und/oder Rücklauf (14, 16) des Heizkörpers (10) angeordnet ist;
- die Schaltung (32) veranlaßt die Öffnung oder Unterbrechung des Zulaufs und/oder Rücklaufs des Heizmediums von bzw. zu einem Zentralheizungssystem mittels der Drosseleinrichtung (18),
**gekennzeichnet** durch die folgenden Merkmale:
a) die Schaltung (32) kann auch eine Drosselung des Zulaufs und/oder Rücklaufs des Heizmediums von bzw. zu dem Zentralheizsystems mittels der Drosseleinrichtung veranlassen, wobei die Öffnung, Unterbrechung oder Drosselung in Abhängigkeit von einer voreingestellten Soll- bzw. Ziel-Raumtemperatur für den Heizkörper (10) und in Abhängigkeit von der Temperatur des Heizmediums am Zulauf des Heizkörpers (10) über eine weitere dort angeordnete Temperaturmeßeinrichtung (22) erfolgt;
b) die Schaltung (32) steuert den Zulauf und/oder den Rücklauf des Heizmediums mittels der Drosseleinrichtung (18, 20) zu bzw. von dem Zentralheizungssystem (12), wenn die Zulauftemperatur einen vorgegebenen Temperaturwert unterschreitet.

8. Heizgerät nach Anspruch 7, **gekennzeichnet** durch eine Steuervorrichtung mit den Merkmalen nach einem der Ansprüche 2 bis 6.

## Claims

1. A control device for a radiator, preferably a bathroom radiator (10),
- having an electric or electronic circuit (32),
- having at least one temperature measurement device (28) for the room temperature,
- having a regulating device for controlling an energy flow, in particular electric current, which can be converted into calorific output, with an electric heating device, preferably an electric heating bar or an electric heating cartridge (24),
- having at least one throttling device for opening or interrupting the flow of the heating medium for arrangement in the supply and/or return (14, 16) of the radiator (10);
- the circuit (32) causes the opening or interruption of the supply and/or return of the heating medium from or respectively to a central heating system by means of the throttling device (18),
**characterised by** the following features:
a) the circuit (32) may also cause a throttling of the supply and/or return of the heating medium from or respectively to the central heating system by means of the throttling device, with the opening, interruption or throttling operation occurring in dependence on a preset set or target room temperature for the radiator (10) and in dependence on the temperature of the heating medium at the supply of the radiator (10) via a further temperature measurement device (22) to be disposed there;
b) the circuit (32) controls the supply and/or the return of the heating medium by means of the throttling device (18, 20) to or respectively from the central heating system (12) when the supply temperature drops below a predetermined temperature value.

2. A control device according to Claim 1,
**characterised in that** an input device (36) is provided to input control parameters, in particular the target or set room temperature.

3. A control device according to one of Claims 1 or 2,
**characterised in that** the control device can be connected to a battery and/or to the power supply and a monitoring circuit is preferably provided, which indicates when the battery is run down to a predetermined value, and if necessary switches over to the power supply in order to charge the battery and preferably keeps the control device operative.

4. A control device according to one of claims 1 to 3,
**characterised in that** the present control signals can be repeated by the control device after the expiry of a predetermined time interval so as to minimise disturbances.

5. A control device according to one of Claims 1 to 4,
**characterised in that** the heating device or respectively the heating bar is provided with zones of varying calorific output or respectively varying resistance in its longitudinal direction, with the calorific output or respectively the resistance preferably increasing in one direction.

6. A control device according to one of the preceding Claims,
**characterised in that** a pressure equalisation tank is connected to the radiator (10).

7. A radiator (10), preferably a bathroom radiator, having a control device, with the following features:
- an electric or electronic circuit (32),
- at least one temperature measurement device (38),
- a regulating device to control a flow of energy, in particular electric current, which can be converted into calorific output, with an electric heating device, preferably an electric heating bar or an electric heating cartridge (24),
- a throttling device for opening or interrupting the flow of the heating medium, which is disposed in the supply and/or return (14, 16) of the radiator (10);
- the circuit (32) brings about the opening or interruption of the supply and/or return of the heating medium from or respectively to a central heating system by means of the throttling device (18),
**characterised by** the following features:
a) the circuit (32) may also bring about a throttling of the supply and/or return of the heating medium from or respectively to the central heating system by means of the throttling device, with the opening, interruption or throttling operation occurring in dependence on a preset set or target room temperature for the radiator (10) and in dependence on the temperature of the heating medium at the supply of the radiator (10) via a further temperature measurement device (22) disposed there;
b) the circuit (32) controls the supply and/or return of the heating medium by means of the throttling device (18, 20) to or respectively from the central heating system (12) when the supply temperature drops below a predetermined temperature value.

8. A heating device according to Claim 7,
**characterised by** a control device having the features according to one of Claims 2 to 6.

## Revendications

1. Dispositif de pilotage pour un élément chauffant, de préférence un élément chauffant pour salle de bains (10), comprenant :
- un circuit électrique ou électronique (32),
- au moins un dispositif de mesure de la température (28), pour mesurer la température ambiante,
- un régulateur pour le contrôle automatique d'un flux d'énergie transformable en puissance calorifique, en particulier du courant électrique, comportant un appareil de chauffage électrique, de préférence un thermoplongeur électrique ou une cartouche de chauffage électrique (24),
- au moins un dispositif de vannage, pour laisser passer ou interrompre le flux de fluide caloporteur, à monter dans la canalisation d'arrivée et/ou de retour (14, 16) de l'élément chauffant (10);
- le circuit (32) provoque l'ouverture ou l'interruption de l'arrivée et/ou du retour du fluide caloporteur en provenance ou en direction d'un système de chauffage central, au moyen du dispositif de vannage (18),
**caractérisé** par les caractéristiques suivantes :
a) le circuit (32) peut également provoquer un étranglement de l'arrivée et/ou du retour du fluide caloporteur en provenance ou en direction du système de chauffage central, au moyen du dispositif de vannage, l'ouverture, l'interruption ou l'étranglement se faisant en fonction d'une température de consigne ou température à atteindre présélectionnée de l'élément chauffant (10), et en fonction de la température du fluide caloporteur dans la canalisation d'arrivée à l'élément chauffant (10), par l'intermédiaire d'un autre dispositif de mesure de la température (22) devant être placé à cet endroit;
b) le circuit (32) commande l'arrivée et/ou le retour du fluide caloporteur en direction ou en provenance du système de chauffage central (12), au moyen du dispositif de vannage (18, 20), si la température d'arrivée devient inférieure à une valeur de température prédéterminée.

2. Dispositif de pilotage selon la revendication 1, **caractérisé en ce qu'**un dispositif d'introduction de données (36) est prévu, pour introduire des paramètres de pilotage, en particulier la température ambiante à atteindre ou température ambiante de consigne.

3. Dispositif de pilotage selon l'une des revendications 1 ou 2, **caractérisé en ce que** le dispositif de pilotage peut être raccordé à une batterie et/ou au secteur, et en ce qu'un circuit de veille de préférence est prévu, lequel indique que la batterie a été vidée à une valeur prédéterminée, et commute éventuellement sur le secteur, pour recharger la batterie, et qui tient de préférence le dispositif de pilotage prêt à fonctionner.

4. Dispositif de pilotage selon l'une des revendications 1 à 3, **caractérisé en ce que** les signaux de commande actuels peuvent être répétés par le dispositif de pilotage après écoulement d'intervalles de temps prédéterminés, pour réduire les pannes à un minimum.

5. Dispositif de pilotage selon l'une des revendications 1 à 4, **caractérisé en ce que** l'appareil de chauffage ou le thermoplongeur est pourvu, dans le sens de sa longueur, de zones de puissance calorifique différente ou de résistance différente, auquel cas la puissance calorifique ou la résistance va en augmentant, de préférence, dans un sens.

6. Dispositif de pilotage selon l'une quelconque des revendications précédentes, **caractérisé en ce qu'**un réservoir d'égalisation de la pression est raccordé à l'élément chauffant (10).

7. Elément chauffant (10), en particulier élément chauffant pour salle de bains, comprenant un dispositif de pilotage ayant les caractéristiques suivantes :
- un circuit électrique ou électronique (32),
- au moins un dispositif de mesure de la température (28),
- un régulateur pour le contrôle automatique d'un flux d'énergie transformable en puissance calorifique, en particulier du courant électrique, comportant un appareil de chauffage électrique, de préférence un thermoplongeur électrique ou une cartouche de chauffage électrique (24),
- au moins un dispositif de vannage, pour laisser passer ou interrompre le flux de fluide caloporteur, monté dans la canalisation d'arrivée et/ou de retour (14, 16) de l'élément chauffant (10);
- le circuit (32) commande l'ouverture ou l'interruption de l'arrivée et/ou du retour du fluide caloporteur en provenance ou en direction d'un système de chauffage central, au moyen du dispositif de vannage (18),
**caractérisé** par les caractéristiques suivantes :
a) le circuit (32) peut également provoquer un étranglement de l'arrivée et/ou du retour du fluide caloporteur en provenance ou en direction du système de chauffage central, au moyen du dispositif de vannage, l'ouverture, l'interruption ou l'étranglement se faisant en fonction d'une température à atteindre ou température de consigne présélectionnée de l'élément chauffant (10), et en fonction de la température du fluide caloporteur dans la canalisation d'arrivée à l'élément chauffant (10), par l'intermédiaire d'un autre dispositif de mesure de la température (22) placé à cet endroit;
b) le circuit (32) commande l'arrivée et/ou le retour du fluide caloporteur en direction ou en provenance du système de chauffage central (12), au moyen du dispositif de vannage (18, 20), si la température d'arrivée devient inférieure à une valeur de température prédéterminée.

8. Elément chauffant selon la revendication 7, **caractérisé** par un dispositif de pilotage ayant les caractéristiques énoncées aux revendications 2 à 6.
